# EUROPEAN PATENT APPLICATION

(11) **EP 3 705 906 A2**
(43) Date of publication of application: **09.09.2020**
(21) Application number: 20161216.5
(22) Date of filing: 05.03.2020
(51) Int. Cl.: G01S 7/481, G01C 21/36, G01S 17/42, G01S 17/931, G02B 27/10

(54) **MULTIPLE VERTICAL LAYER LIGHT DETECTION AND RANGING SYSTEM, AUTO-PARKING ASSISTANCE, AND COMPUTER VISION LANE DETECTION AND KEEPING**

(30) Priority: 05.03.2019 IN 201941008470
(71) Applicant: Visteon Global Technologies, Inc., Van Buren Township, MI 48111-5711 (US)
(72) Inventor: NGUYEN, Giang-Nam, 76227 Karlsruhe (DE); VERONESE, Lucas, 76227 Karlsruhe (DE); NARAYAN, Vikram, 76227 Karlsruhe (DE); AMBADAS, Ganesh Adam, 411018 Pune (IN); KORPE, Bhushan Rajesh, 415001 Maharashtra (IN); CHOUGULE, Shriyash, 411018 Pune (IN); GOVINDAPPA, Vijay, 560098 Bengaluru (IN); Di MAURO, Giuseppe, 76137 Karlsruhe (DE); ISMAIL, Asad, 76227 Karlsruhe (DE)
(74) Representative: MERH-IP Matias Erny Reichl Hoffmann Patentanwälte PartG mbB

(57) **Abstract**

A light detection and ranging (LiDAR) system for a vehicle includes a laser diode configured to generate a laser and a divider configured to divide the laser, in a vertical direction with respect to the vehicle, yielding a plurality of sub-beams. The LiDAR system also includes a receiver configured to receive reflections of the plurality of sub-beams and a processor configured to detect an environment of the vehicle based on the reflections of the plurality of sub-beams.

## Description

### CROSS-REFERENCES TO RELATED APPLICATIONS

This patent application claims priority to Indian Provisional Patent Application Serial No. 201941008470 filed March 5, 2019, which is incorporated herein by reference in its entirety.

### FIELD

One or more embodiments herein generally relate to a light detection and ranging (LiDAR) system for a vehicle. Among other things, the LiDAR system may be used for lane detection, lane keeping, and parking assistance.

### BACKGROUND

Traditionally, a light detection and ranging (LiDAR) system uses light to measure a distance to a target. In a conventional set-up, the LiDAR system may be attached to a roof of a vehicle. This often results in raising a center of gravity of the vehicle and increasing an overall height of the vehicle. Additionally, in the conventional set-up, the vehicle itself may limit the field of view of the LiDAR system. In the conventional set-up, a hood, a roof deck, or other elements of the vehicle may obstruct the field of view of the LiDAR system. An alternative is to angle the field of view, such that the vehicle is no longer in the field of view. However, both cases result in blind spots, for the LiDAR system, around the vehicle. As such, the LiDAR system would be unable to detect targets that are in the blind spots. Moreover, the conventional set-up often requires use of expensive sensors, which are cost prohibitive for mass usage.

Outside of traditional LiDAR systems, there are also traditional camera systems and sonar systems. Camera systems, which use visible light, may be susceptible to lighting conditions. For example, a traditional camera system may become ineffective in a low-lighting condition. When the camera system takes an image in a low-lighting condition, objects in the image may become indiscernible. The image may appear black, due to the low-lighting condition. For example, this may occur while driving through an unlit or poorly lit parking structure or driving at night, post-sunset, and/or on an unlit or poorly lit road. Additionally, the traditional camera systems and sonar systems often have limited detection ranges, which may result in blind spots. Moreover, the traditional camera systems and sonar systems may be susceptible to weather conditions, such as rain or snow, which may reduce performance. Furthermore, the traditional camera systems and sonar systems may struggle with noise interference.

### SUMMARY

Some embodiments relate to a system that may include a laser diode configured to generate a laser for a vehicle. The system may also include a divider configured to divide the laser in a vertical direction with respect to the vehicle yielding a plurality of sub-beams. The system may further include a receiver configured to receive reflections of the plurality of sub-beams. The system may additionally include a processor configured to detect an environment of the vehicle based on the reflections of the plurality of sub-beams.

An aspect of the disclosed embodiments includes a light detection and ranging (LiDAR) system for a vehicle. The LiDAR system includes a laser diode configured to generate a laser and a divider configured to divide the laser, in a vertical direction with respect to the vehicle, yielding a plurality of sub-beams. The LiDAR system also includes a receiver configured to receive reflections of the plurality of sub-beams and a processor configured to detect an environment of the vehicle based on the reflections of the plurality of sub-beams.

Another aspect of the disclosed embodiments includes an apparatus for a vehicle. The apparatus includes a processor and a memory. The memory includes instructions that, when executed by the processor, cause the processor to: receive reflections of a plurality of sub-beams from a receive, the plurality of sub-beams corresponding to a laser divided in a vertical direction with respect to the vehicle; detect an environment of the vehicle based on the reflections of the plurality of sub-beams; detect a first parking slot based on a reflection of a first sub-beam of the plurality of sub-beams; detect a second parking slot based on a reflection of a second sub-beam of the plurality of sub-beams; and provide parking slot determination based on combining the first parking slot detection and the second parking slot detection.

Another aspect of the disclosed embodiments includes a system for a vehicle. The system includes a first two-dimensional light detection and ranging sensor configured to project a first laser beam at a first angle. The system also includes a second two-dimensional light detection and ranging sensor configured to project a second laser beam at a second angle, wherein the second angle is offset by an angular separation from the first angle. The system also includes one or more receivers configured to receive reflections of the first laser beam and the second laser beam. The system also includes a processor configured to detect an environment of the vehicle based on the reflections of the first laser beam and the second laser beam.

### BRIEF DESCRIPTION OF THE DRAWINGS

The disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
Figure 1 generally illustrates a vehicle with a two-vertical-layer light detection and ranging system, according to the principles of the present disclosure.
Figure 2 generally illustrates a system combining a two-vertical-layer LiDAR and an inertial measurement unit, according to the principles of the present disclosure.
Figure 3 generally illustrates an implementation of a beam divider, according to the principles of the present disclosure.
Figure 4 generally illustrates an architecture for auto-parking assistance, according to the principles of the present disclosure.
Figure 5 generally illustrates a lane detection and keeping system according to the principles of the present disclosure.

### DETAILED DESCRIPTION

While certain approaches to vehicular LiDAR employ a single vertical layer for object detection, some embodiments provide enhancement through the use of a second vertical layer, which can be used for detecting lanes, broadly including parking markers.

Some embodiments may employ an infrared laser diode and a cylindrical grating as a 1x2 diffractive spot generator or a 50:50 beam splitter to achieve two layers of detection in a vertical direction. The detection in the horizontal direction can use any desired technology, such as one-dimensional (ID) flash, mechanical scanning, micro-electro-mechanical systems (MEMS), and so on.

In another aspect, some embodiments relate to a LiDAR-based module for free parking slot detection, and simultaneously for detecting static and moving objects. In some embodiments, an auto-parking assistance system can be used for both parallel and perpendicular parking, whether parking lanes are present or absent.

More particularly, some embodiments may rely on two independent procedures to hypothesize parking slot positions. One procedure may consider LiDAR lane points for detecting parking lane markings while the other may identify static and dynamic objects above the ground surface to find a parking slot between two static objects. These two procedures may be complementary in nature. By combining their outputs, a reliable detection of free parking slots may be produced.

In a further aspect, some embodiments relate to a lane detection and keeping module based on a set of sensors. The set of sensors can include a camera, a two-dimensional (2D) LiDAR, an IMU, and a car odometry unit. A computer-implemented process for lane detection and keeping can be implanted using a multicore processing system.

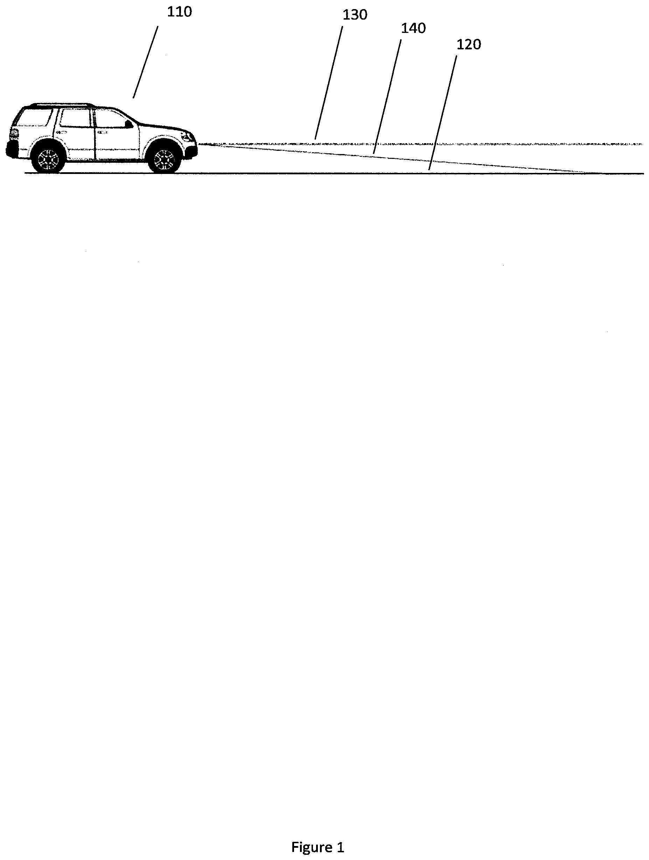

Figure 1 illustrates a vehicle 110 with a two-vertical-layer light detection and ranging system, according to some embodiments. As shown in Figure 1, a vehicle 110 can have a forward-facing light detection and ranging system, also sometimes referred to as a LiDAR system. The LiDAR system may utilize one or more solid-state LiDAR units for laser projection and detection.

The LiDAR system can be mounted above ground level 120 on the vehicle 110. For example, the LiDAR system may be mounted on a front portion of the vehicle 110, such as in a front bumper or grille. In doing so, the LiDAR system may have an unobstructed view of the ground surface in front of the vehicle 110, as well as objects on the ground surface in front of the vehicle. As another example, the LiDAR system may be mounted on a rear portion of the vehicle 110, such as a rear bumper or rear trunk lid. Similarly, this may provide an unobstructed view of the ground surface behind the vehicle, as well as objects on the ground surface behind the vehicle. Alternative mounting arrangements are also envisioned. This LiDAR system can project a pair of laser sub-beams, including an upper beam 130 and a lower beam 140. The upper beam 130 may be projected substantially horizontally, while the lower beam 140 may be projected downwards. The upper beam 130 may be used for object detection, such as detecting pedestrians, cyclists, and other vehicles. The lower beam 140 may be used for detecting lane markings, speed bumps, potholes, and the like. The upper beam 130 may provide a first field of view, and the lower beam 140 may provide a second field of view.

In some embodiments, the LiDAR system may include exactly two laser sub-beams. These beams may be split from a single beam, as will be described below.

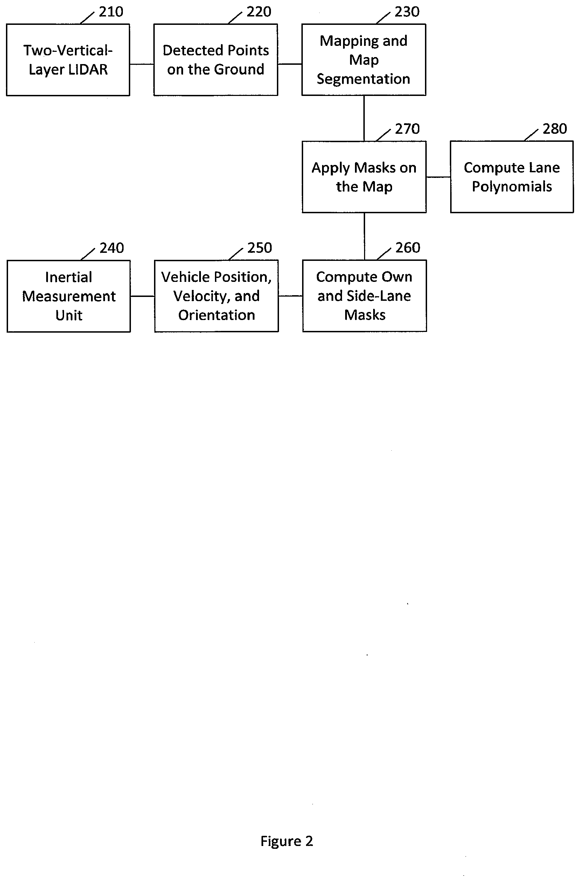

Figure 2 illustrates a system combining a two-vertical-layer LiDAR and an inertial measurement unit, according to some embodiments. As shown in Figure 2, a system can include a two-vertical-layer LiDAR 210, such as that illustrated in Figure 1. The LiDAR 210 can provide detected points on the ground 220, for example from a bottom of two laser sub-beams. The detected points on the ground 220 can be provided to a mapping and map segmentation module 230, which can be implemented by a computer hardware processor running suitable software and relying on suitable memory.

The inertial measurement unit 240 can provide vehicle position, velocity, and orientation 250. The vehicle position, velocity, and orientation 250 can be provided to compute the vehicle's own position and side-lanes to generate a mask 260 in a computer-implemented module.

A computer-implemented module may, at 270, apply the masks from 260 to the map from 230. Based on applying the masks to the map at 270, the system can compute lane polynomials at 280 using a computer-implemented module. The various modules for these tasks can be implemented on the same processor, different processors, different cores of the same processor, or any other desired way. The modules may rely on a shared memory, on individual memories, or any other desired way.

It should be understood that the processor (e.g., and/or any processors described herein) may include any suitable processor, including those described herein. The processor may include or be in communication with a memory. The memory may include instructions that, when executed by the processor, cause the processor to, at least, perform the functions described herein, and/or perform other suitable vehicle operations. The memory may comprise a single disk or a plurality of disks (e.g., hard drives), and includes a storage management module that manages one or more partitions within the memory. In some embodiments, memory may include flash memory, semiconductor (solid state) memory or the like. The memory 106 may include Random Access Memory (RAM), a Read-Only Memory (ROM), or a combination thereof.

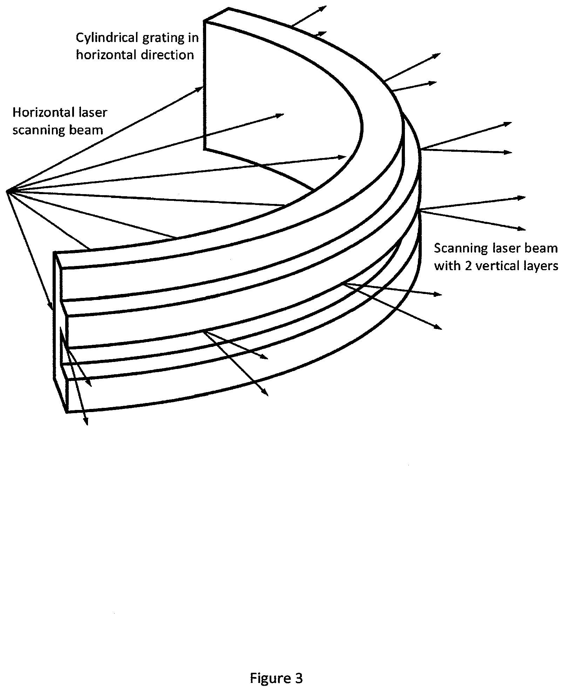

Figure 3 illustrates an implementation of a beam divider, according to some embodiments. As shown in Figure 3, a grating can be provided that is cylindrical in a horizontal direction. The grating can produce a pair of vertical sub-beams. These vertical sub-beams can serve as two vertical layers to the laser beam. The horizontal laser beam can be produced from a one-dimensional (ID) flash unit, a mechanical scanning unit, micro-electro-mechanical systems (MEMS), and so on.

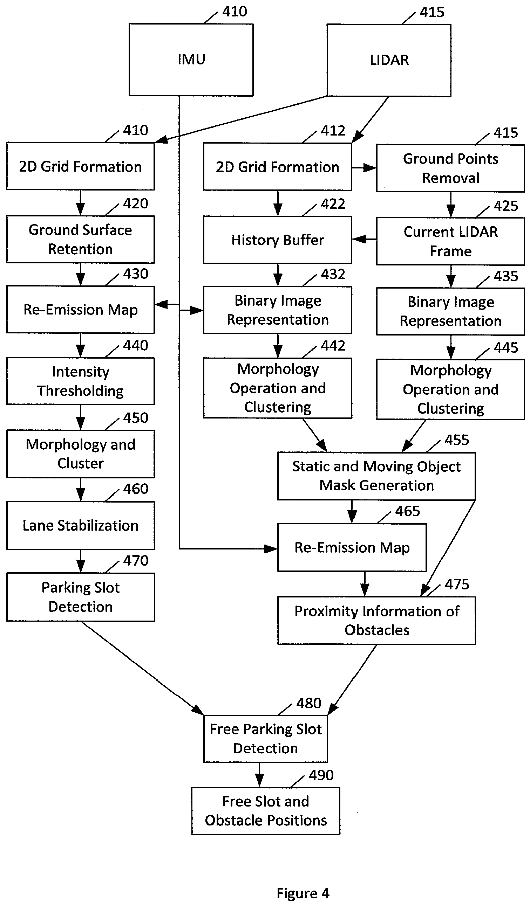

Figure 4 illustrates an architecture for auto-parking assistance, according to some embodiments. The architecture shown in Figure 4 is an example architecture of a system or set of modules, which may be computer-implemented modules. The modules may run on one or more computer processor based on computer program instructions stored in at least one memory.

The system can include an IMU 410 and a LiDAR 415, such as the LiDAR illustrated in Figures 1 and 3. The IMU 410 and LiDAR 415 can be integrated as shown in Figure 2, for example. Figure 4 can be viewed as a particular instance of Figure 2 with detail and a more specific application, namely parking slot determination, as contrasted with more general lane determination.

As shown in Figure 4, the LiDAR 415 can be provided to 2D grid formation 410 and 2D grid formation 412. 2D grid formation 410 can provide an output to ground surface retention 420, which can yield a re-emission map 430 when combined with data from IMU 410. The re-emission map 430 can undergo intensity thresholding 440 and a morphology and cluster process 450. Then, lane stabilization 460 can take the output of the morphology, cluster process 450, and provide parking slot detection 470.

In a parallel process, 2D grid formation 412 can provide an output to ground points removal 415 and history buffer 422. A current LiDAR frame 425 can be determined with the ground points removed at 415. This frame can be provided to history buffer 422 and converted to (or created as) a binary image representation 435. Similarly, the data from the history buffer 422 can be used to provide a binary image representation 432. Morphology and clustering operations 442 and 445 can be respectively performed on binary image representations 432 and 435. The output of morphology and cluster can provide static and moving object mask generation 455. This mask and the data from IMU 410 can yield a re-emission map 465. The re-emission map 465 and the mask can yield proximity information of obstacles 475.

The parking slot detection 470 and proximity information of obstacles 475 can be used to perform free parking slot detection 480. The free parking slot detection 480 can provide free slot and obstacle positions 490.

The use of the history buffer 422 can permit combining multiple frames, particularly consecutive frames, since recent frames may have a high degree of real-world correlation, particularly in a parking scenario, where many of the identified objects may be static objects.

In some embodiments, a parking system may rely on multiple LiDAR sensors. This system may use, for example, eight LiDAR sensors positioned around the periphery of a car, in order to capture line and object data in 360 degrees around the vehicle.

Some embodiments may rely on a camera, a LiDAR with two vertical sub-beams, an IMU, and an odometry unit. The IMU may be configured to provide linear velocity and angular velocity. The odometry unit may provide linear velocity and steering angle.

The camera, LiDAR with two vertical sub-beams, IMU, and odometry unit can serve as example sensor inputs to a computer processor. The computer processor can be implemented as an electronic control unit (ECU) of a vehicle.

Lane detection and keeping are aspects of advanced driver-assistance systems (ADAS) and automated vehicles (AV). Thus, some embodiments may relate to ADAS and/or AV systems. Some embodiments relate to making such lane detection and keeping more reliable in all conditions, compared to an approach that relies solely on one sensor or one type of sensor. In some embodiments, different sensor types and redundancy can be used to increase the safety and trust of lane detection, lane keeping, and departure warning. The LiDAR system with two vertical sub-beams can also be replaced by two separate 2D LiDAR sensors. Thus, in some embodiments, there is no 3D LiDAR sensor, even though a LiDAR with two vertical sub-beams and horizontal flash, scanning, or the like, may be able to function to replace a 3D LiDAR.

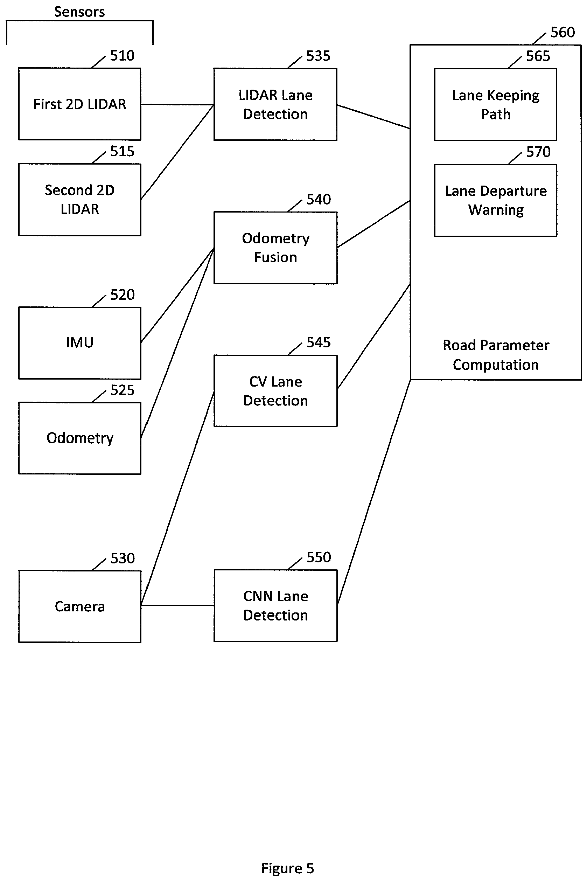

Figure 5 illustrates a lane detection and keeping system according to some embodiments. As shown in Figure 5, there can be two LiDAR systems, a first 2D LiDAR 510 and a second 2D LiDAR system 520. These can be redundant systems, thereby permitting LiDAR usage to continue even in the event of an interruption that causes one of the LiDAR systems 510, 520 to go off-line or otherwise become unavailable for use. Alternatively, the two systems 510, 520 can be used complementarily. For example, one system can be used for object detection and one system can be used for lane detection. As a further option, each system can always operate, thereby providing higher confidence to the overall system, such as the lane detection and keeping system. The LiDAR system(s) 510, 520 can provide data to a LiDAR lane detection module 535.

The sensors can also include an IMU 520 and an odometry unit 525, which may provide car odometry. The IMU 520 and odometry unit 525 can provide data to an odometry fusion module 540, which can be a computer-implemented module.

The system can also include one or more cameras 530. Images from the one or more cameras can be provided to a computer vision (CV) lane detection module 545 and to neural network module, such as a convolutional neural network (CNN) lane detection module 550. The CNN lane detection module 550 may include any suitable neural network and/or any suitable features of a neural network and/or a CNN

The various detection and fusion modules described above can provide outputs to a road parameter computation module 560, which can include components for lane keeping path 565 and lane departure warning 570. The lane keeping path 565 can determine a travel path for a vehicle in order to keep the vehicle within a lane. The lane departure warning 570 can generate a warning or action when it appears that a vehicle is departing or about to depart from a lane.

The LiDAR lane detection module 535 can do a Simultaneous Localization and Mapping (SLAM) to detect the lanes and curbs. The camera 530 can be used to detect the lanes using the CV lane detection 545, while the CNN lane detection 550 can be used to detect and classify lanes.

Car odometry unit 525 can provide the linear velocity and steering angle. Moreover, car odometry 525 can serve as a redundancy for IMU 520. A double IMU 520 is also possible.

The road parameter computation module 560 can compute a SLAM and can use several lane measurements to compute the lane keeping path at 565. The use of multiple sensors can increase safety and trust of the lane detection, keeping, and departure warning.

The road parameter computation module 560 may rely on the CNN lane detection 550 outputting two frames per second (FPS) or more. In this case, the odometry fusion module 540 may need to provide at least 25 FPS. Likewise, the road parameter computation module 560 may rely on the LiDAR lane detection 535 outputting 5 FPS. In this case, the odometry fusion module 540 may need to provide at least 20 FPS.

The frame rate of the road parameter computation module 560 may be the sum of the CNN lane detection module 550 (5fps), classical CV lane detection module 545 (10fps), LiDAR lane detection module 535 (10 fps), and odometry fusion module 540 (40fps). The road parameter computation throughput in this case may be 65 fps.

The CNN, LiDAR and Classical methods can detect the lanes up to 40, 15 and 20 meters ahead, respectively. The lane keeping path component 565 may need to work even when LiDAR or CNN functions are unavailable. If both LiDAR and CNN become unavailable, control of the car may need to be taken over by a human. Similarly, the lane keeping path component 565 may need to work even when IMU or car odometry are unavailable. Similarly, if both become unavailable, then human control may be necessary.

The camera 530 may permit operation in light or moderate raining conditions, while the LiDAR systems may permit operation even in complete darkness. Depending on the techniques used, the CNN lane detection module 550 may be capable of working when the lanes are visible during snow conditions.

The CNN lane detection 550 may be embodied in a graphics processing unit (GPU). The GPU may be configured to perform CNN lane color and type determination.

The remaining modules (535, 540, 545, and 560) may be embodied on central processing unit (CPU) cores. The modules may each have their own dedicated processing cores of a single or multiple CPUs.

Some embodiments relate to a system that may include a laser diode configured to generate a laser for a vehicle. The system may also include a divider configured to divide the laser in a vertical direction with respect to the vehicle yielding a plurality of sub-beams.

The divider can be a cylindrical grating configured to provide a 1 x 2 diffractive spot generator. The divider can be a 50:50 beam splitter. Other divider arrangements are also permitted.

The system may further include a receiver configured to receive reflections of the plurality of sub-beams. The system may additionally include a processor configured to detect an environment of the vehicle based on the reflections of the plurality of sub-beams.

The system may include a flash laser in horizontal direction. The system may also include a horizontal scanning mechanism configured to scan the sub-beams in a horizontal direction. The horizontal scanning mechanism can be a MEMS device or any other desired mechanism.

A first sub-beam of the plurality of sub-beams may be configured to detect lane position of the vehicle, while a second sub-beam of the plurality of sub-beams may be configured to detect objects in the environment of the vehicle. The divider can be configured to provide an angular separation of from 1 to 3 degrees or any other angles between a pair of the plurality of sub-beams. The angular separation may depend on a distance at which lane detection is desired and the height at which the laser is installed on the vehicle.

The processor of the system can be configured to perform a first parking slot detection based on a reflection of a first sub-beam of the plurality of sub-beams. The processor can be further configured to perform a second parking slot detection based on a reflection of a second sub-beam of the plurality of sub-beams. The second sub-beam can be vertically displaced from the first sub-beam. The processor may be configured to provide parking slot determination based on combining the first parking slot detection and the second parking slot detection.

The first parking slot detection can include detecting ground points and classifying the detected ground points as parking lane points. Thus, a first independent procedure can be to detect ground points and further classify them as parking lane points or not. This process can include using image thresholding techniques to emphasize the parking lane points from a LiDAR and integrating them with the vehicle's own motion from an IMU for consecutive frames.

The second parking slot detection can include detecting static objects and determining whether the static objects are within a threshold distance of one another. Thus, a second independent procedure can be to detect static objects and to find if the distance between these objects is within a set threshold in both horizontal and vertical directions. This procedure can be carried out by, for example, creating a grid map and applying a probabilistic approach to compute the probability of a given cell being associated to an object. The grid map can then be converted into a binary image and clustered with different labels using imagine morphological operators.

The system can further include a camera mounted on the vehicle. The processor can be configured to combine a first lane detection based on the reflections of the plurality of sub-beams with a second lane detection based on an image detected by the camera.

The system can additionally include an inertial measurement unit installed in the vehicle and an odometry unit installed in the vehicle. The inertial measurement unit and the odometry unit can be configured to provide inputs to the processor to compute a local pose of the vehicle.

The processor can be equipped with a convolutional neural network, and wherein the combination of the first lane detection and the second lane detection are performed by the convolutional neural network.

In some embodiments, a light detection and ranging (LiDAR) system for a vehicle includes a laser diode configured to generate a laser and a divider configured to divide the laser, in a vertical direction with respect to the vehicle, yielding a plurality of sub-beams. The LiDAR system also includes a receiver configured to receive reflections of the plurality of sub-beams and a processor configured to detect an environment of the vehicle based on the reflections of the plurality of sub-beams.

In some embodiments, the divider comprises a cylindrical grating configured to provide a 1 x 2 diffractive spot generator. In some embodiments, the divider comprises a 50:50 beam splitter. In some embodiments, the LiDAR system also includes a horizontal flash beam generation or a horizontal scanning mechanism configured to scan the sub-beams in a horizontal direction. In some embodiments, a first sub-beam of the plurality of sub-beams is configured to detect lane position of the vehicle. In some embodiments, a second sub-beam of the plurality of sub-beams is configured to detect objects in the environment of the vehicle. In some embodiments, the divider is configured to provide an angular separation of from 1 to 3 degrees between a pair of the plurality of sub-beams. In some embodiments, the LiDAR system also includes a camera mounted on the vehicle. In some embodiments, the processor is configured to combine a first lane detection based on the reflections of the plurality of sub-beams with a second lane detection based on an image detected by the camera. In some embodiments, the LiDAR system also includes an inertial measurement unit installed in the vehicle and an odometry unit installed in the vehicle. In some embodiments, the inertial measurement unit and the odometry unit are configured to provide inputs to the processor to compute a local pose of the vehicle. In some embodiments, the divider is configured to provide an angular separation between a pair of the plurality of sub-beams, wherein the angular separation depends on a desired distance at which lane detection is to occur and depends on a height at which the laser diode is installed on the vehicle.

In some embodiments, an apparatus for a vehicle includes a processor and a memory. The memory includes instructions that, when executed by the processor, cause the processor to: receive reflections of a plurality of sub-beams from a receive, the plurality of sub-beams corresponding to a laser divided in a vertical direction with respect to the vehicle; detect an environment of the vehicle based on the reflections of the plurality of sub-beams; detect a first parking slot based on a reflection of a first sub-beam of the plurality of sub-beams; detect a second parking slot based on a reflection of a second sub-beam of the plurality of sub-beams; and provide parking slot determination based on combining the first parking slot detection and the second parking slot detection.

In some embodiments, the second sub-beam is vertically displaced from the first sub-beam. In some embodiments, the first parking slot detection comprises detecting ground points and classifying the detected ground points as parking lane points. In some embodiments, the second parking slot detection comprises detecting static objects and determining whether the static objects are within a threshold distance of one another. In some embodiments, the processor includes a convolutional neural network. In some embodiments, the instructions further cause the processor to use the convolutional neural network to the combine the first parking slot detection and the second parking slot detection. In some embodiments, the laser is divided by a divider that includes a cylindrical grating configured to provide a 1 x 2 diffractive spot generator. In some embodiments, the divider comprises a 50:50 beam splitter. In some embodiments, the divider is configured to provide an angular separation of from 1 to 3 degrees between a pair of the plurality of sub-beams.

In some embodiments, a system for a vehicle includes a first two-dimensional light detection and ranging sensor configured to project a first laser beam at a first angle. The system also includes a second two-dimensional light detection and ranging sensor configured to project a second laser beam at a second angle, wherein the second angle is offset by an angular separation from the first angle. The system also includes one or more receivers configured to receive reflections of the first laser beam and the second laser beam. The system also includes a processor configured to detect an environment of the vehicle based on the reflections of the first laser beam and the second laser beam.

The above discussion is meant to be illustrative of the principles and various embodiments of the present disclosure. Numerous variations and modifications will become apparent to those skilled in the art once the above disclosure is fully appreciated.

The word "example" is used herein to mean serving as an example, instance, or illustration. Any aspect or design described herein as "example" is not necessarily to be construed as preferred or advantageous over other aspects or designs. Rather, use of the word "example" is intended to present concepts in a concrete fashion. As used in this application, the term "or" is intended to mean an inclusive "or" rather than an exclusive "or." That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application should generally be construed to mean "one or more" unless specified otherwise or clear from context to be directed to a singular form. Moreover, use of the term "an implementation" or "one implementation" throughout is not intended to mean the same embodiment or implementation unless described as such.

Implementations the systems, algorithms, methods, instructions, etc., described herein can be realized in hardware, software, or any combination thereof. The hardware can include, for example, computers, intellectual property (IP) cores, application-specific integrated circuits (ASICs), programmable logic arrays, optical processors, programmable logic controllers, microcode, microcontrollers, servers, microprocessors, digital signal processors, or any other suitable circuit. The term "processor" should be understood as encompassing any of the foregoing hardware, either singly or in combination. The terms "signal" and "data" are used interchangeably.

As used herein, the term module can include a packaged functional hardware unit designed for use with other components, a set of instructions executable by a controller (e.g., a processor executing software or firmware), processing circuitry configured to perform a particular function, and a self-contained hardware or software component that interfaces with a larger system. For example, a module can include an application specific integrated circuit (ASIC), a Field Programmable Gate Array (FPGA), a circuit, digital logic circuit, an analog circuit, a combination of discrete circuits, gates, and other types of hardware or combination thereof. In other embodiments, a module can include memory that stores instructions executable by a controller to implement a feature of the module.

Further, in one aspect, for example, systems described herein can be implemented using a general-purpose computer or general-purpose processor with a computer program that, when executed, carries out any of the respective methods, algorithms, and/or instructions described herein. In addition, or alternatively, for example, a special purpose computer/processor can be utilized which can contain other hardware for carrying out any of the methods, algorithms, or instructions described herein.

Further, all or a portion of implementations of the present disclosure can take the form of a computer program product accessible from, for example, a computer-usable or computer-readable medium. A computer-usable or computer-readable medium can be any device that can, for example, tangibly contain, store, communicate, or transport the program for use by or in connection with any processor. The medium can be, for example, an electronic, magnetic, optical, electromagnetic, or a semiconductor device. Other suitable mediums are also available.

## Claims

1. A light detection and ranging (LiDAR) system for a vehicle, the LiDAR system comprising:
a laser diode configured to generate a laser;
a divider configured to divide the laser, in a vertical direction with respect to the vehicle, yielding a plurality of sub-beams;
a receiver configured to receive reflections of the plurality of sub-beams; and
a processor configured to detect an environment of the vehicle based on the reflections of the plurality of sub-beams.

2. The LiDAR system of claim 1, wherein the divider comprises a cylindrical grating configured to provide a 1 x 2 diffractive spot generator.

3. The LiDAR system of claim 1, wherein the divider comprises a 50:50 beam splitter.

4. The LiDAR system of claim 1, further comprising:
a horizontal flash beam generation or a horizontal scanning mechanism configured to scan the sub-beams in a horizontal direction.

5. The LiDAR system of claim 1, wherein a first sub-beam of the plurality of sub-beams is configured to detect lane position of the vehicle.

6. The LiDAR system of claim 5, wherein a second sub-beam of the plurality of sub-beams is configured to detect objects in the environment of the vehicle.

7. The LiDAR system of claim 1, wherein the divider is configured to provide an angular separation of from 1 to 3 degrees between a pair of the plurality of sub-beams.

8. The LiDAR system of claim 1, further comprising:
a camera mounted on the vehicle,
wherein the processor is configured to combine a first lane detection based on the reflections of the plurality of sub-beams with a second lane detection based on an image detected by the camera.

9. The LiDAR system of claim 8, further comprising:
an inertial measurement unit installed in the vehicle; and
an odometry unit installed in the vehicle,
wherein the inertial measurement unit and the odometry unit are configured to provide inputs to the processor to compute a local pose of the vehicle.

10. The LiDAR system of claim 1, wherein the divider is configured to provide an angular separation between a pair of the plurality of sub-beams, wherein the angular separation depends on a desired distance at which lane detection is to occur and depends on a height at which the laser diode is installed on the vehicle.

11. An apparatus for a vehicle, the system comprising:
a processor; and
a memory including instructions that, when executed by the processor, cause the processor to:
receive reflections of a plurality of sub-beams from a receive, the plurality of sub-beams corresponding to a laser divided in a vertical direction with respect to the vehicle;
detect an environment of the vehicle based on the reflections of the plurality of sub-beams;
detect a first parking slot based on a reflection of a first sub-beam of the plurality of sub-beams;
detect a second parking slot based on a reflection of a second sub-beam of the plurality of sub-beams; and
provide parking slot determination based on combining the first parking slot detection and the second parking slot detection.

12. The apparatus of claim 11, wherein the second sub-beam is vertically displaced from the first sub-beam.

13. The apparatus of claim 11, wherein the first parking slot detection comprises detecting ground points and classifying the detected ground points as parking lane points.

14. The apparatus of claim 11, wherein the second parking slot detection comprises detecting static objects and determining whether the static objects are within a threshold distance of one another.

15. The apparatus of claim 11, wherein the processor includes a convolutional neural network.
